(19) Europäisches Patentamt
European Patent Office
Office européen des brevets

(11) EP 1 835 192 A1

(12) **EUROPEAN PATENT APPLICATION**
published in accordance with Art. 158(3) EPC

(43) Date of publication:
**19.09.2007 Bulletin 2007/38**

(51) Int Cl.:
***F16D 3/04*** (2006.01)

(21) Application number: **05820394.4**

(86) International application number:
**PCT/JP2005/023827**

(22) Date of filing: **26.12.2005**

(87) International publication number:
**WO 2006/070767 (06.07.2006 Gazette 2006/27)**

(84) Designated Contracting States:
**DE FR GB**

(30) Priority: **28.12.2004 JP 2004379636**
**28.12.2004 JP 2004378586**
**28.12.2004 JP 2004379609**

(71) Applicant: **HONDA MOTOR CO., Ltd.**
**Tokyo 107-8556 (JP)**

(72) Inventors:
• **MABUCHI, Toru**
**c/o HONDA MOTOR CO., LTD.**
**Tokyo 1078556 (JP)**

• **OGURA, Takahiro**
**c/o HONDA MOTOR CO., LTD.**
**Tokyo 1078556 (JP)**

(74) Representative: **Piésold, Alexander James**
**Frank B. Dehn & Co.**
**St Bride's House**
**10 Salisbury Square**
**London EC4Y 8JD (GB)**

(54) **CONSTANT VELOCITY JOINT**

(57) A constant velocity joint has an input shaft side member (12) having first guiding grooves (32a-32f) formed in it; an output shaft side member (14) having guiding grooves (38a-38f) formed in it, the second guiding grooves (38a-38f) intersecting the first guiding grooves (32a-32f); a retainer (16) having retaining windows (18) formed in it; and a torque transmission member (20) that is held so as to be displaceable along the retaining windows (18) of the retainer (16) and in which a first ring body (27a) and a second ring body (27b) are rotatably supported by a first shaft body (23a) and a second shaft body (23b) through a needle bearing (25), the first shaft body (23a) and the second shaft body (23b) being in rotating contact with side walls (35a, 35b) of the first guiding grooves (32a-32f) and/or with side walls (41a, 41b) of the second guiding grooves (38a-38f).

FIG. 1 10

EP 1 835 192 A1

**Description**

TECHNICAL FIELD

The present invention relates to a constant velocity universal joint (constant velocity joint) which connects a transmission shaft to another transmission shaft in a drive force transmitting device of an automobile, for example.

BACKGROUND ART

Heretofore, the drive force transmitting devices of electric vehicles or the like employ a constant velocity universal joint which connects a transmission shaft to another transmission shaft for transmitting rotational forces to the axles.

As a conventional technology related to a constant velocity universal joint, Japanese Laid-Open Patent Publication No. 2004-90696, for example, discloses an inwheel motor system wherein a motor has a hollow nonrotatable case coupled to a knuckle by a damper mechanism and a rotatable case coupled to a wheel by a flexible-coupling.

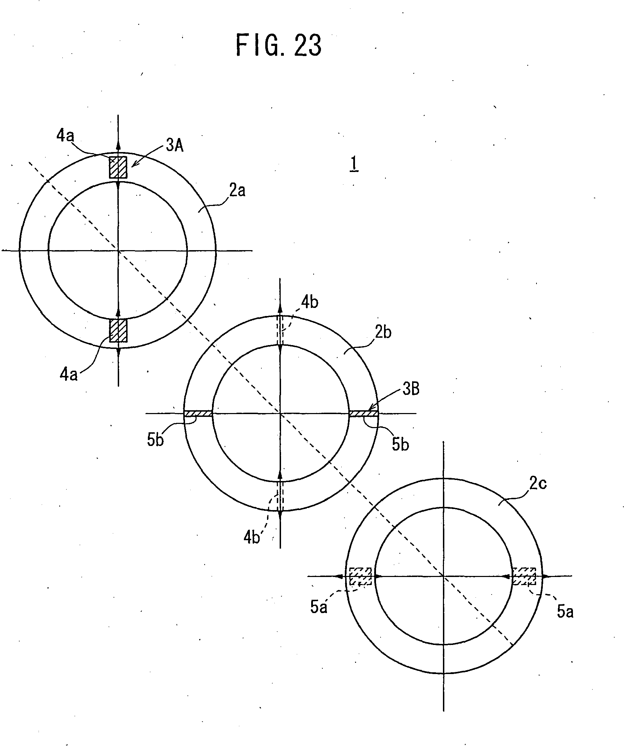

As shown in FIG. 23, the flexible coupling 1 of the in-wheel motor system disclosed in Japanese Laid-Open Patent Publication No. 2004-90696 has first through third hollow disk-shaped plates 2a through 2c and linear guides 3A, 3B disposed respectively on the face and back sides of the central hollow disk-shaped second plate 2b, the linear guides 3A, 3B being operable in mutually perpendicular directions.

Specifically, the linear guide 3A comprises a pair of guide members 4a, 4a mounted on the surface of the first plate 2a, which is positioned near the wheel, remotely from the wheel and angularly spaced 180 degrees from each other, and a pair of guide rails 4b, 4b mounted on the surface of the middle second plate 2b which faces the first plate 2a and engaging the guide members 4a, 4a, respectively. The linear guide 3A couples the hollow disk-shaped first and second plates 2a, 2b to each other.

The linear guide 3B comprises a pair of guide rails 5b, 5b mounted on the back side of the second plate 2b and angularly spaced 180 degrees from each other at respective positions that are angularly spaced 90 degrees from the guide rails 4b, 4b, and a pair of guide members 5a, 5a mounted on the surface of the third plate 2c, which is positioned near the motor, that faces the second plate 2b and engaging the guide rails 5b, 5b, respectively. The linear guide 3B couples the hollow disk-shaped second and third plates 2b, 2c to each other.

Since the first through third plates 2a, 2b, 2c are coupled by the linear guides 3A, 3B as described above, the motor shaft and the wheel shaft are coupled to each other such that they can be displaced eccentrically with respect to each other in any directions. The flexible coupling 1 is thus capable of transmitting a torque efficiently from the rotatable case to the wheel.

DISCLOSURE OF THE INVENTION

According to the structure disclosed in Japanese Laid-Open Patent Publication No. 2004-90696 wherein the rotational drive forces from the motor are transmitted to the wheel by the flexible coupling 1, when the motor shaft and the wheel shaft are displaced eccentrically (out of coaxial alignment) with respect to each other between the first plate 2a and the second plate 2b and between the second plate 2b and the third plate 2c, the torque is transmitted through a relative sliding motion between the guide members 4a, 4a (5a, 5a) and the guide rails 4b, 4b (5b, 5b). Therefore, a large frictional loss is caused by the resistance to the sliding motion, and an increased surface pressure acts on the torque transmitting surfaces.

It is a general object of the present invention to provide a constant velocity universal joint which is capable of reducing a frictional loss caused at the time an input shaft and an output shaft are displaced eccentrically with respect to each other.

A major object of the present invention is to provide a constant velocity universal joint which is capable of reducing a surface pressure acting on torque transmitting surfaces.

BRIEF DESCRIPTION OF THE DRAWINGS

FIG. 1 is an exploded perspective view of a constant velocity universal joint according to a first embodiment of the present invention;

FIG. 2 is a vertical cross-sectional view, taken along an axial direction, of the constant velocity universal joint shown in FIG. 1;

FIG. 3 is a side elevational view, as viewed in the direction indicated by the arrow Z, of an input shaft side member of the constant velocity universal joint shown in FIG. 1;

FIG. 4 is a side elevational view, as viewed in the direction indicated by the arrow Z, of an output shaft side member of the constant velocity universal joint shown in FIG. 1;

FIG. 5 is a side elevational view, as viewed in the direction indicated by the arrow Z, of a retainer and torque transmitting members of the constant velocity universal joint shown in FIG. 1;

FIG. 6 is a side elevational view showing the state in which the axis of an input side first shaft and the axis of an output side second shaft of the constant velocity universal joint shown in FIG. 1 are aligned with each other;

FIG. 7 is a side elevational view showing the state in which the axis of the first shaft and the axis of the second shaft are eccentrically displaced horizontally by an interaxial distance R from the state shown in FIG. 6;

FIG. 8 is a side elevational view showing a relative relationship between the torque transmitting members held in retaining windows and first and second guide grooves;

FIG. 9 is a side elevational view showing a relative relationship between the torque transmitting members held in the retaining windows and the first and second guide grooves;

FIG. 10 is a diagram illustrative of how a constant velocity is achieved by the constant velocity universal joint shown in FIG. 1;

FIG. 11 is an exploded perspective view of the constant velocity universal joint shown in FIG. 1 wherein three torque transmitting members are held in retaining windows;

FIG. 12 is a vertical cross-sectional view, taken along an axial direction, of a constant velocity universal joint according to a second embodiment of the present invention;

FIG. 13 is a diagram showing the manner in which a conventional flexible coupling operates;

FIG. 14 is an enlarged diagram showing a portion of FIG. 13;

FIG. 15 is an exploded perspective view of a constant velocity universal joint according to a third embodiment of the present invention;

FIG. 16 is a vertical cross-sectional view, taken along an axial direction, of the constant velocity universal joint shown in FIG. 15;

FIG. 17 is an exploded perspective view of the constant velocity universal joint shown in FIG. 15 wherein three rollers are held in retaining windows;

FIG. 18 is a vertical cross-sectional view, taken along an axial direction, of a constant velocity universal joint according to a fourth embodiment of the present invention;

FIG. 19 is an exploded perspective view of a constant velocity universal joint according to a fifth embodiment of the present invention;

FIG. 20 is a vertical cross-sectional view, taken along an axial direction, of the constant velocity universal joint shown in FIG. 19;

FIG. 21 is an exploded perspective view of the constant velocity universal joint shown in FIG. 19 wherein three balls are held in retaining windows;

FIG. 22 is a vertical cross-sectional view, taken along an axial direction, of a constant velocity universal joint according to a sixth embodiment of the present invention; and

FIG. 23 is an exploded perspective view of a conventional flexible coupling.

BEST MODE FOR CARRYING OUT THE INVENTION

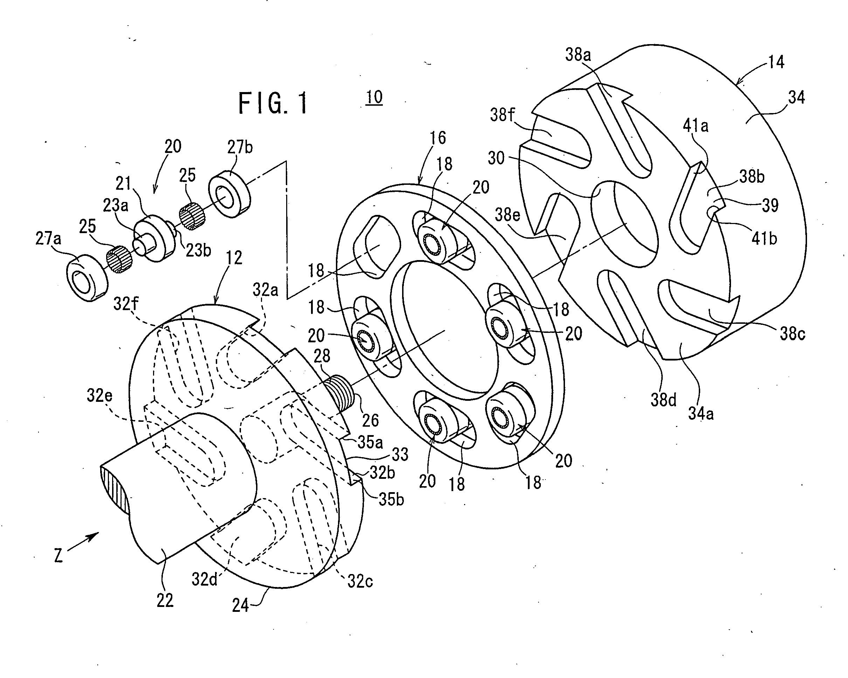

In FIG. 1, the reference numeral 10 represents a constant velocity universal joint according to a first embodiment of the present invention. The constant velocity universal joint 10 basically comprises an input shaft side member 12 connected to an end of an input side first shaft, not shown, an output shaft side member 14 connected to an end of an output side second shaft, not shown, a thin disk-shaped retainer 16 interposed between the input shaft side member 12 and the output shaft side member 14, and a plurality of (six in the present embodiment) torque transmitting members 20 displaceably held in respective retaining windows 18 defined in the retainer 16.

The input shaft side member 12 and the output shaft side member 14 are of relative nature. The output shaft side-member 14 may be connected to the input side first shaft, not shown, and the input shaft side member 12 may be connected to the output side second shaft, not shown. Alternatively, the constant velocity universal joint may comprise input shaft side members 12 with the retainer 16 interposed therebetween, or output shaft side members 14 with the retainer 16 interposed therebetween.

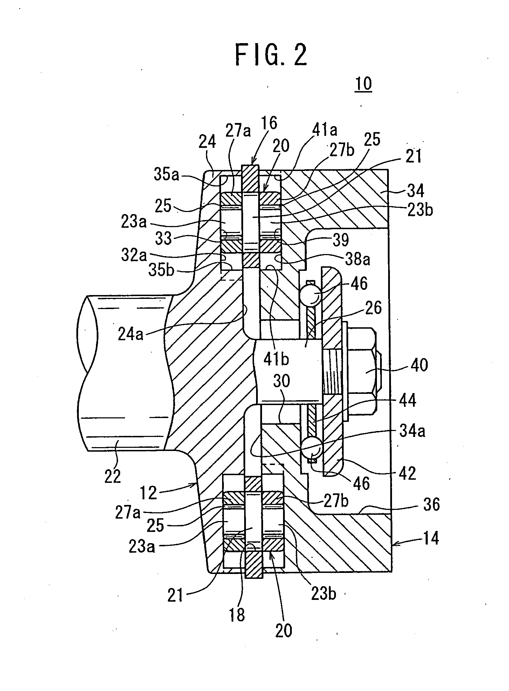

As shown in FIGS. 1 and 2, the input shaft side member 12 comprises a shaft 22 integrally connected to the input side first shaft, not shown, and a disk 24 continuously extending radially outwardly from an end of the shaft 22. The shaft 22 may be axially extended a predetermined length, so that the shaft 22 may be formed in common with the first shaft, not shown.

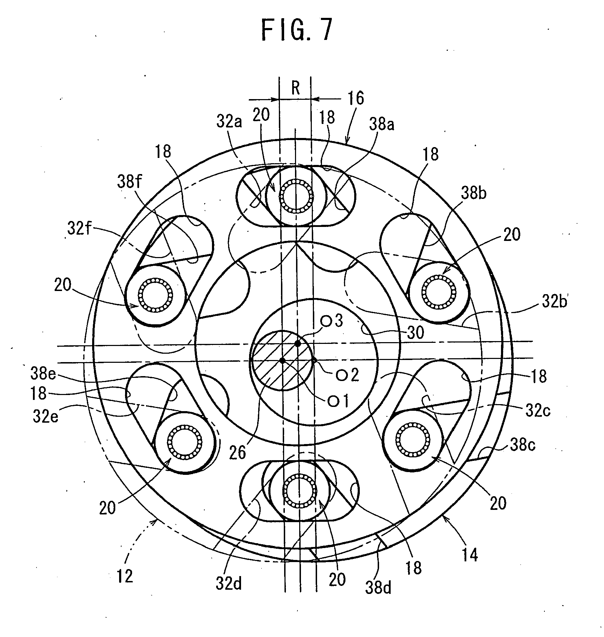

The disk 24 has a circular flat side surface 24a (extending perpendicularly to the first shaft, not shown) remote from the shaft 22. A boss 26 projects centrally from the circular flat side surface 24a coaxially with the shaft 22 and has a diameter smaller than the shaft 22. The boss 26 has an externally threaded outer circumferential surface 28. The outside diameter of the boss 26 is set to one-half of the inside diameter of a hole 30 defined in the output shaft side member 14 through which the boss 26 extends (see FIG. 7).

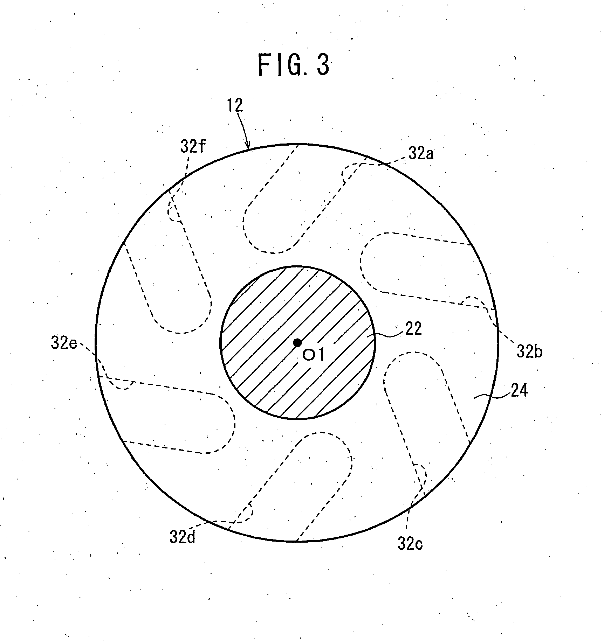

As shown in FIG. 3, the side surface 24a of the disk 24 has a plurality of (six, i.e., as many as the number of the torque transmitting members 20) first guide grooves 32a through 32f defined therein in the form of oblong grooves extending continuously to an outer circumferential edge of the disk 24 and inclined a predetermined angle toward the center of the disk 24 in a counterclockwise direction around a point O1 at the axial center of the disk 24.

Each of the first guide grooves 32a (32b through 32f) comprises a substantially elliptical oblong groove defined in the circular side surface 24a and having an end disposed in the vicinity of the boss 26 between the center O1 of the circular side surface 24a and the outer circumferential edge and an opposite end continuously extending to the outer circumferential edge. The six first guide grooves 32a through 32f are disposed at angular intervals of 60 degrees around the axial center. As shown in FIGS. 1 and 2, each of the first guide grooves 32a through 32f has a rectangular cross-sectional shape including a bottom wall 33 as a flat surface and side walls 35a, 35b confronting each other and extending substantially perpendicularly to the bottom wall 33.

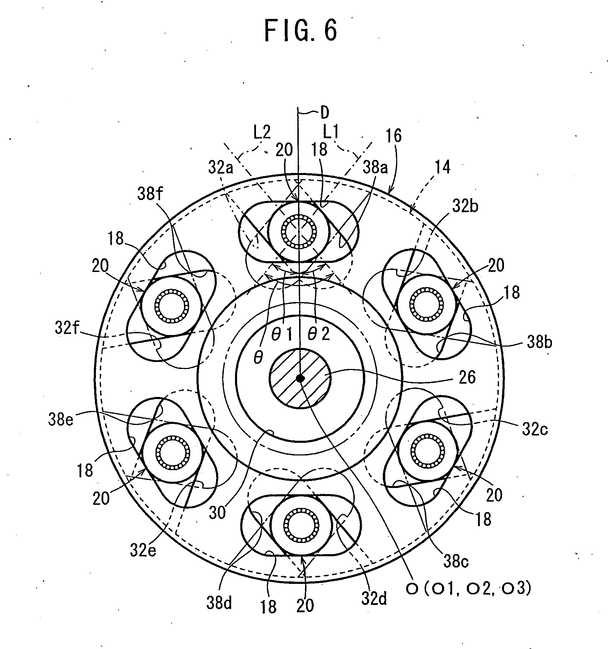

The first guide grooves 32a through 32f are inclined at an angle $\theta1$ which is set as an angle of intersection between the diameter D of the disk 24 and the major axis L1 of the substantially elliptical first guide grooves 32a through 32f, as described later on (see FIG. 6). The inclination angle $\theta1$ should preferably be in the range of $0 < \theta1 < 90$ degrees, and more preferably in the range of $35 < \theta1 < 45$ degrees.

As shown in FIGS. 1 and 2, the output shaft side member 14 comprises a bottomed hollow cylinder having a hole 30 defined centrally therein for receiving the boss 26 of the input shaft side member 12 extending therethrough and an annular flange 34 extending axially from an outer circumferential portion of the bottomed hollow cylinder by a predetermined length (in a direction away from the input shaft side member 12), the bottomed hollow cylinder having a recess 36 defined by the annular flange 34.

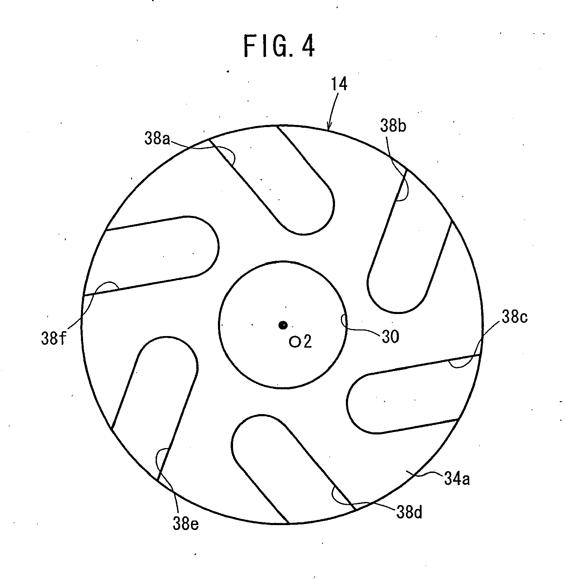

The output shaft side member 14 has a circular flat side surface 34a (extending perpendicularly to the second shaft, not shown) facing the side surface 24a of the input shaft side member 12. As shown in FIG. 4, the side surface 34a has a plurality of (six, i.e., as many as the number of the torque transmitting members 20) second guide grooves 38a through 38f defined therein in the form of oblong grooves extending continuously to an outer circumferential edge of the output shaft side member 14 and inclined a predetermined angle toward the center of the output shaft side member 14 in a clockwise direction, opposite to the first guide grooves 32a through 32f, around a point O2 about which the output shaft side member 14 is rotatable.

Each of the second guide grooves 38a (38b through 38f) comprises a substantially elliptical oblong groove defined in the circular side surface 34a and having an end disposed intermediate between the center O2 and the outer circumferential edge and an opposite end continuously extending to the outer circumferential edge. The six second guide grooves 38a through 38f are disposed at angular intervals of 60 degrees around the axial center. As shown in FIGS. 1 and 2, each of the second guide grooves 38a through 38f has a rectangular cross-sectional shape including a bottom wall 39 as a flat surface and side walls 41a, 41b confronting each other and extending substantially perpendicularly to the bottom wall 39.

The second guide grooves 38a through 38f are inclined at an angle $\theta2$ which is set as an angle of intersection between the diameter (outside diameter) D of the bottomed hollow cylinder and the major axis L2 of the substantially elliptical second guide grooves 38a through 38f, as explained later on (see FIG. 6). The inclination angle $\theta2$ should preferably be in the range of $0 < \theta2 < 90$ degrees, and more preferably in the range of $35 < \theta2 < 45$ degrees.

The first guide grooves 32a through 32f defined in the input shaft side member 12 and the second guide grooves 38a through 38f defined in the output shaft side member 14 may be disposed in line symmetry with respect to the diameter D and may have their major axes L1, L2 inclined in opposite directions to each other through identical angles $(\theta1 = \theta2)$ (see FIGS. 3 and 4 for comparison).

The first guide grooves 32a through 32f and the second guide grooves 38a through 38f may be disposed such that they confront each other with the retaining windows 18 in the retainer 16 being interposed therebetween and their major axes L1, L2 cross each other. The major axes L1 of the first guide grooves 32a through 32f and the major axes L2 of the second guide grooves 38a through 38f do not need to extend perpendicularly to each other. Stated otherwise, the guide grooves in the mutually corresponding positions between the input shaft side member 12 and the output shaft side member 14 are not limited to being perpendicular to each other, but may be disposed such that the major axes L1, L2 thereof cross each other.

In the first embodiment, the radially outermost ends of the first guide grooves 32a through 32f and the second guide grooves 38a through 38f are defined in contact with the outer circumferential edges of the input shaft side member 12 and the output shaft side member 14. However, the radially outermost ends of the first guide grooves 32a through 32f and the second guide grooves 38a through 38f are not limited to such a position, but may be spaced a predetermined distance from the outer circumferential edges of the input shaft side member 12 and the output shaft side member 14 with a clearance interposed therebetween. In this case, however, the outside diameters of the input shaft side member 12 and the output shaft side member 14 are increased.

As shown in FIG. 2, a slightly thick washer 42 is mounted on the boss 26 of the input shaft side member 12 by a nut 40 threaded over the externally threaded outer circumferential surface 28, the boss 26 extending through the output shaft side member 14 and projecting a predetermined length into the recess 36 of the output shaft side member 14. A plurality of ball bearings 46 rollingly held in holes defined in a circular plate 44 are interposed between the washer 42 and the output shaft side member 14. The ball bearings 46 serve to allow the output shaft side member 14 to rotate smoothly, and can be dispensed with.

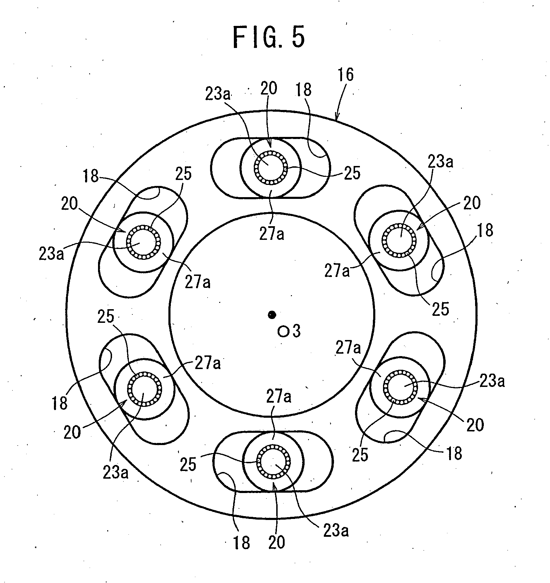

As shown in FIG. 5, the ring-plate-shaped retainer 16 is interposed between the input shaft side member 12 and the output shaft side member 14. The retainer 16 has six, i.e., as many elliptical retaining windows 18 defined therein as the number of the torque transmitting members 20. The six retaining windows 18 are disposed at angular intervals of 60 degrees around the axial center, and positioned such that the points of intersection between the major and minor axes of the retaining windows 18 are placed on one hypothetical circle.

The major axes of the elliptical retaining windows 18 cross the major axes of the first guide grooves 32a through 32f and the second guide grooves 38a through 38f.

The relationship between the intersection angle θ and the inclination angles θ1, θ2 of the first guide grooves 32a through 32f and the second guide grooves 38a through 38f will be described below. FIG. 6 shows the state wherein the center O1 of rotation of the input shaft side member 12, the center O2 of rotation of the output shaft side member 14, and the center 03 of rotation of the retainer 16 are aligned with each other at the point O. When the center O1 of rotation of the input shaft side member 12, the center O2 of rotation of the output shaft side member 14, and the center 03 of rotation of the retainer 16 are aligned with each other at the point O, the major axis L1 of the first guide groove 32a (32b through 32f) in the input shaft side member 12 and the major axis L2 of the second guide groove 38a (38b through 38f) in the output shaft side member 14 cross each other at the intersection angle θ. At this time, the intersection angle θ is bisected into the inclination angle θ1 of the first guide groove 32a (32b through 32f) and the inclination angle θ2 of the second guide groove 38a (38b through 38f) with the diameter D extending through the point of intersection between the major axis L1 of the first guide groove 32a (32b through 32f) and the major axis L2 of the second guide groove 38a (38b, through 38f) (θ = θ1 + θ2).

The intersection angle θ may be set in the range of $0 < θ < 180$ degrees and more preferably in the range of $70 < θ < 90$ degrees. The inclination angle θ1 of the first guide groove 32a (32b through 32f) and the inclination angle θ2 of the second guide groove 38a (38b through 38f) may be identical to each other (θ1 = θ2). The inclination angle θ1 may be set in the range of $0 < θ1 < 90$ degrees and more preferably in the range of $35 < θ1 < 45$ degrees. The inclination angle θ2 may be set in the range of $0 < θ2 < 90$ degrees and more preferably in the range of $35 < θ2 < 45$ degrees.

If the intersection angle θ between the major axis L1 of the first guide groove 32a (32b through 32f) and the major axis L2 of the second guide groove 38a (38b through 38f) is too large, then the dimension of the retaining windows 18 along the major axes thereof is increased. As the outside diameter of the retainer 16 increases, the outside diameters of the input shaft side member 12 and the output shaft side member 14 increase, resulting in an increase in the outside diameter of the constant velocity universal joint 10 in its entirety.

As shown in FIG. 1, each of the plural (six in the present embodiment) torque transmitting members 20 comprises a cylindrical disk 21 having an outer circumferential surface engaging in the retaining window 18 in the retainer 16, cylindrical first and second shafts 23a, 23b fixed coaxially to the respective face and back surfaces of the disk 21, a plurality of needle bearings (bearings) 25 surrounding the circumferential walls of the first and second shafts 23a, 23b, and first and second rings 27a, 27b rotatably mounted on the first and second shafts 23a, 23b so as to be rotatable around the axes of the first and second shafts 23a, 23b as the needle bearings 25 roll.

A lubricating oil, not shown, for allowing the needle bearings 25 to roll smoothly may be provided between the outer circumferential surfaces of the first and second shafts 23a, 23b and the inner circumferential surfaces of the first and second rings 27a, 27b. The needle bearings 25 are held out of contact with the retainer 16.

The first rings 27a and/or the second rings 27b of the torque transmitting members 20 are held in rolling contact with the side walls 35a, 35b of the first guide grooves 32a through 32f and/or the side walls 41a, 41b of the second guide grooves 38a through 38f. The first rings 27a and the second rings 27b are rotatable in the same direction or opposite directions as the needle bearings 25 roll. Ridges lying between end faces and circumferential side walls of the first rings 27a and the second rings 27b are beveled into a round cross-sectional shape (see FIG. 2).

The disks 21 of the torque transmitting members 20 are held so as to be displaceable along the retaining windows 18 in the retainer 16, and the first rings 27a and/or the second rings 27b that are mounted on the first and second shafts 23a, 23b of the torque transmitting members 20 by the needle bearings 25, are disposed so as to be displaceable in rolling contact with the side walls 35a, 35b of the first guide grooves 32a through 32f in the input shaft side member 12 and/or the side walls 41a, 41b of the second guide grooves 38a through 38f in the output shaft side member 14. The torque transmitting members 20 are made of a metal material, for example, and perform a rotational torque transmitting function.

The torque transmitting members 20 transmit a rotational torque from the first shaft, not shown, and the input shaft side member 12 through the output shaft side member 14 to the second shaft, not shown. When the torque transmitting members 20 are displaced along the first guide grooves 32a through 32f and/or the second guide grooves 38a through 38f, the torque transmitting members 20 allow the input shaft side member 12 and the output shaft side member 14 to be eccentrically displaced relatively to each other (allow the axis of the first shaft, not shown, and the axis of the second shaft, not shown, to be shifted out of coaxial alignment) in radial directions (directions perpendicular to the axial direction). ,

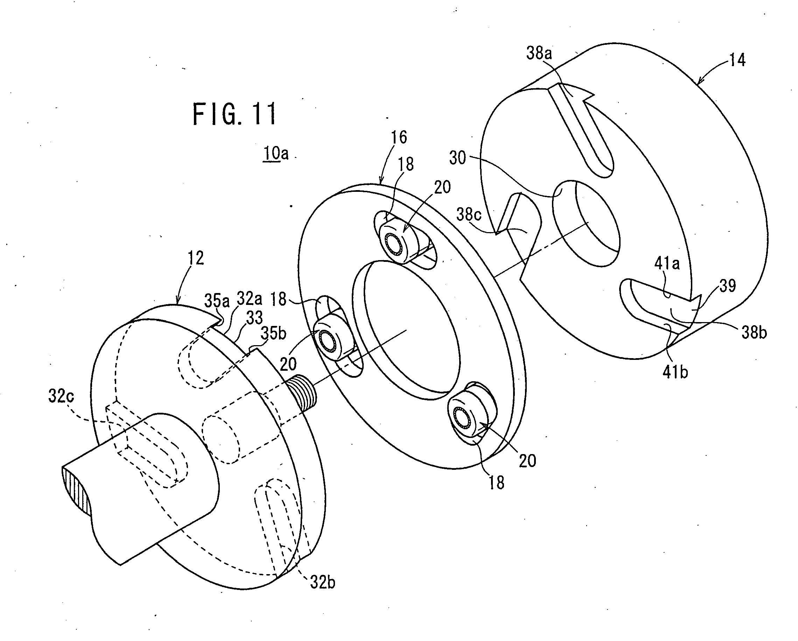

The number of the torque transmitting members 20 is not limited to six. As indicated by a constant velocity universal joint 10a according to a modification shown in FIG. 11, a minimum of three torque transmitting members 20 may be employed. In the constant velocity universal joint 10a, the number of first guide grooves 32a through 32c, the number of second guide grooves 38a through 38c, and the number of retaining windows 18 in the retainer 16 are selected so as to correspond to the number of three torque transmitting members 20.

The constant velocity universal joint 10 according to the first embodiment of the present invention is basically constructed as described above. Operation and advantages of the constant velocity universal joint 10 will be described below.

When the non-illustrated first shaft rotates, the rotational torque thereof is transmitted from the input shaft side member 12 through each of the torque transmitting members 20 to the output shaft side member 14, which rotates the non-illustrated second shaft in a given direction at the same speed as the first shaft.

FIG. 6 shows the state in which the axis of the first shaft and the axis of the second shaft are aligned with each other, with the eccentricity between the axis of the first shaft and the axis of the second shaft being nil. In other words, in FIG. 6, the center O1 of rotation of the input shaft side member 12, the center O2 of rotation of the output shaft side member 14, and the center 03 of rotation of the retainer 16 are aligned with each other at the point O.

FIG. 7 shows the state in which the axis of the first shaft and the axis of the second shaft are eccentrically displaced horizontally in mutually opposite directions, the first shaft and the second shaft being eccentrically displaced (out of coaxial alignment) by a horizontal interaxial distance R between the center O1 of rotation of the input shaft side member (first shaft) 12 and the center O2 of rotation of the output shaft side member (second shaft) 14. In FIGS. 6 and 7, the retainer 16 and the output shaft side member 14 are viewed in front elevation along the direction indicated by the arrow Z in FIG. 1, and the first guide grooves 32a through 32f in the input shaft side member 12 are plotted by imaginary lines represented by two-dot-and-dash lines.

If the axes of the first and second shafts are eccentrically displaced out of coaxial alignment with each other, since the torque transmitting members 20 are displaced along the first and second guide grooves 32a through 32f and 38a through 38f, which cross each other, while the torque transmitting members 20 are kept retained by the retaining windows 18 in the retainer 16, the first and second shafts are allowed to be eccentrically displaced (out of coaxial alignment) with each other.

Thus, in the first embodiment, the torque transmitting members 20 are kept retained by the retaining windows 18 in the retainer 16, and the rotational drive forces are transmitted from the input shaft side member 12 to the output shaft side member 14 while the torque transmitting members 20 are being displaced between the first guide grooves 32a through 32f and the second guide grooves 38a through 38f. Since the torque transmitting members 20 are displaced along the first guide grooves 32a through 32f and/or the second guide grooves 38a through 38f while the first rings 27a and/or the second rings 27b are being held in rolling contact with the side walls 35a, 35b of the first guide grooves 32a through 32f and/or the side walls 41a, 41b of the second guide grooves 38a through 38f, the frictional resistance is reduced and hence the frictional loss can be reduced.

Stated otherwise, according to the conventional technology, the resistance to the sliding motion is large due to sliding contact between the guide members and the guide rails of the flexible coupling (linear guides), whereas according to the first embodiment, the rolling friction due to the rolling contact of the first rings 27a and the second rings 27b that are supported respectively on the first shafts 23a and the second shafts 23b of the torque transmitting members 20 by the needle bearings 25 is effective to reduce the frictional resistance. As a result, according to the first embodiment, the surface pressure on the torque transmitting surfaces is smaller than with the conventional technology, reducing the load on the torque transmitting members 20, so that the constant velocity universal joint 10 is capable of transmitting the rotational torque smoothly.

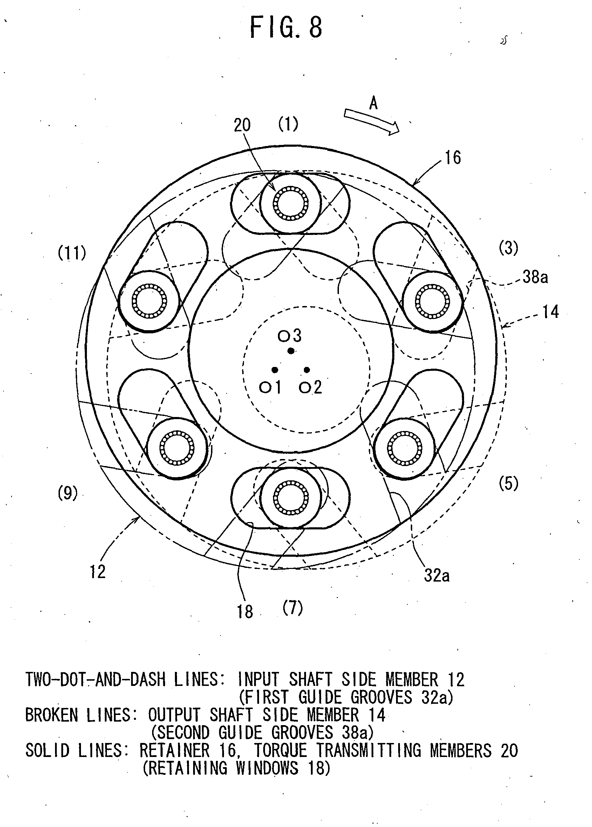

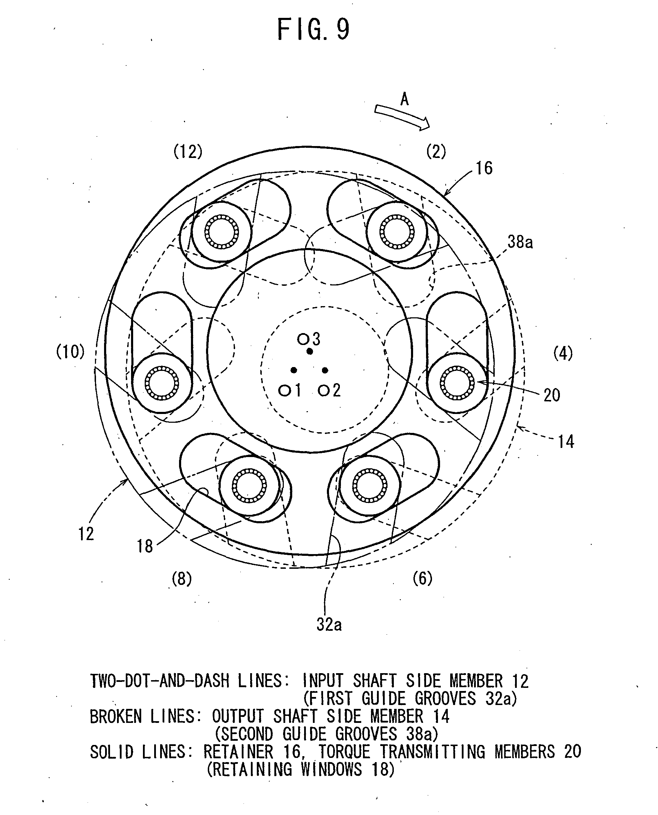

The positional relationship between the torque transmitting members 20, the first guide grooves 32a, the second guide grooves 38a, and the retaining windows 18 at the time the input shaft side member 12, the output shaft side member 14, and the retainer 16 rotate in unison with each other in the direction indicated by the arrow A while the first shaft and the second shaft, not shown, are being displaced out of coaxial alignment, will be described in detail below with reference, to FIGS. 8 and 9.

FIGS. 8 and 9 show, for the sake of simplicity, the positional relationship between a single retaining window 18 engaging a single torque transmitting member 20, and a single first guide groove 32a and a single second guide groove 38a in which the single torque transmitting member 20 slides, with the other five torque transmitting members 20 being omitted from illustration. Specifically, one revolution of the input shaft side member 12 and the output shaft side member 14 in the direction indicated by the arrow A is divided into a sequence of states (1) - (12). Only the odd-numbered states are shown in an annular (parallel) pattern as a whole in FIG. 8, and only the even-numbered states are shown in an annular (parallel) pattern as a whole in FIG. 9.

In FIGS. 8 and 9, the input shaft side member 12 and first guide groove 32a are indicated by the two-dot-and-dash lines, the output shaft side member 14 and the second guide groove 38a by the broken lines, and the retainer 16, the torque transmitting member 20, and the retaining window 18 by the solid lines.

It is assumed that the input shaft side member 12 rotates about the eccentrically displaced center O1 of rotation, the output shaft side member 14 about the eccentrically displaced center O2 of rotation, and the retainer 16 about the eccentrically displaced center 03 of rotation. A triangle is formed by interconnecting the center O1 of rotation, the center O2 of rotation, and the center 03 of rotation.

In the description which follows, inner sides, near the respective centers 01, O2 of rotation, of the first guide groove 32a and the second guide groove 38a which are substantially elliptical in shape are referred to as "ends along the major axis", and outer peripheral edges in opposite directions thereto as "other ends along the major axis". An end of the elliptical retaining window 18 defined in the retainer 16, along the direction in which the input shaft side member 12, the output shaft side member 14, and the retainer 16 rotate, is referred to as an "end along the major axis", and an opposite end thereof along the direction in which the input shaft side member 12, the output shaft side member 14, and the retainer 16 rotate as an "other end along the major axis".

In the state (1) shown in FIG. 8, the torque transmitting member 20 is positioned centrally in the elliptical retaining window 18 in the retainer 16. When the input shaft side member 12, the output shaft side member 14, and the retainer 16 rotate a predetermined angle from the state (1) shown in FIG. 8, they reach the state (2) shown in FIG. 9 in which the torque transmitting member 20 remains retained by the other end (the outer peripheral edge) along the major axis of the first guide groove 32a, slightly displaced along the end (opposite to the outer peripheral edge) along the major axis of the second guide groove 38a, and slightly displaced from the center of the elliptical retaining window 18 toward the end along the major axis.

When the input shaft side member 12, the output shaft side member 14, and the retainer 16 rotate a predetermined angle from the state (2) shown in FIG. 9, they reach the state (3) shown in FIG. 8 in which the torque transmitting member 20 remains retained by the other end (the outer peripheral edge) along the major axis of the first guide groove 32a, further displaced toward the end along the major axis of the second guide groove 38a, and reaches the end along the major axis of the elliptical retaining window 18.

When the input shaft side member 12, the output shaft side member 14, and the retainer 16 rotate a predetermined angle from the state (3) shown in FIG. 8, they reach the state (4) shown in FIG. 9 in which the torque transmitting member 20 remains retained by the end along the major axis of the elliptical retaining window 18, slightly displaced toward the end along the major axis of the first guide groove 32a, and further displaced toward the end along the major axis of the second guide groove 38a.

When the input shaft side member 12, the output shaft side member 14, and the retainer 16 rotate a predetermined angle from the state (4) shown in FIG. 9, they reach the state (5) shown in FIG. 8 in which the torque transmitting member 20 remains retained by the end along the major axis of the elliptical retaining window 18, further displaced toward the end along the major axis of the first guide groove 32a, and reaches the end along the major axis of the second guide groove 38a.

When the input shaft side member 12, the output shaft side member 14, and the retainer 16 rotate a predetermined angle from the state (5) shown in FIG. 8; they reach the state (6) shown in FIG. 9 in which the torque transmitting member 20 remains retained by the end along the major axis of the second guide groove 38a, slightly displaced toward the end along the major axis of the first guide groove 32a, and slightly displaced from the end along the major axis of the retaining window 18 in the opposite direction (the direction away from the end).

When the input shaft side member 12, the output shaft side member 14, and the retainer 16 rotate a predetermined angle from the state (6) shown in FIG. 9, they reach the state (7) shown in FIG. 8 in which the torque transmitting member 20 remains retained by the end along the major axis of the second guide groove 38a, displaced to the end along the major axis of the first guide groove 32a, and displaced to the center of the elliptical retaining window 18.

When the input shaft side member 12, the output shaft side member 14, and the retainer 16 rotate a predetermined angle from the state (7) shown in FIG. 8, they reach the state (8) shown in FIG. 9 in which the torque, transmitting member 20 remains retained by the end along the major axis of the first guide groove 32a, slightly displaced toward the outer peripheral edge along the second guide groove 38a, and displaced from the center of the elliptical retaining window 18 toward the other end along the major axis thereof.

When the input shaft side member 12, the output shaft side member 14, and the retainer 16 rotate a predetermined angle from the state (8) shown in FIG. 9, they reach the state (9) shown in FIG. 8 in which the torque transmitting member 20 remains retained by the end along the major axis of the first guide groove 32a, further displaced toward the outer peripheral edge along the second guide groove 38a, and reaches the other end along the major axis of the elliptical retaining window 18.

When the input shaft side member 12, the output shaft side member 14; and the retainer 16 rotate a predetermined angle from the state (9) shown in FIG. 8, they reach the state (10) shown in FIG. 9 in which the torque transmitting member 20 remains retained by the other end along the major axis of the elliptical retaining window 18, slightly displaced away from the end along the major axis of the first guide groove 32a in the opposite direction, and further displaced toward the outer peripheral edge along the second guide groove 38a.

When the input shaft side member 12, the output shaft side member 14, and the retainer 16 rotate a predetermined angle from the state (10) shown in FIG. 9, they reach the state (11) shown in FIG. 8 in which the torque transmitting member 20 remains retained by the other end along the major axis of the elliptical retaining window 18, slightly displaced further away from the end of the first guide groove 32a toward the outer peripheral edge thereof, and reaches the other end (the outer peripheral edge) along the major axis of the second guide groove 38a.

When the input shaft side member 12, the output shaft side member 14, and the retainer 16 rotate a predetermined angle from the state (11) shown in FIG. 8, they reach the state (12) shown in FIG. 9 in which the torque transmitting member 20 remains retained by the other end (the outer peripheral edge) along the major axis of the second guide groove 38a, slightly displaced toward the outer peripheral edge as the other end along the major axis of the first guide groove 32a, and slightly displaced away from the other end of the elliptical retaining window 18.

When the input shaft side member 12, the output shaft side member 14, and the retainer 16 rotate a predetermined angle from the state (12) shown in FIG. 9, they return to the state (1) shown in FIG. 8 in which the torque transmitting member 20 remains retained by the other end (the outer peripheral edge) along the major axis of the second guide groove 38a, reach the other end (the outer peripheral edge) along the major axis of the first guide groove 32a, and displaced to the center of the elliptical retaining window 18. The above revolution from the state (1) to the state (12) is repeated continuously.

Therefore, as indicated by the states (1) through (12) shown in FIGS. 8 and 9, the torque transmitting member 20 retained by the elliptical retaining window 18 in the retainer 16 and the first and second guide grooves 32a, 38a with which the first and second rings 27a, 27b of the torque transmitting member 20 are held in rolling contact, coact with each other to allow the input shaft side member 12 and the output shaft side member 14 to rotate in unison with each other to transmit the rotational torque smoothly from the input side to the output side while the first shaft and the second shaft are being kept out of coaxial alignment with each other.

In this manner, while the non-illustrated first shaft coupled to the input shaft side member 12 and the non-illustrated second shaft coupled to the output shaft side member 14 rotate at the same speed as each other, the first shaft and the second shaft are allowed to be kept out of coaxial alignment with each other.

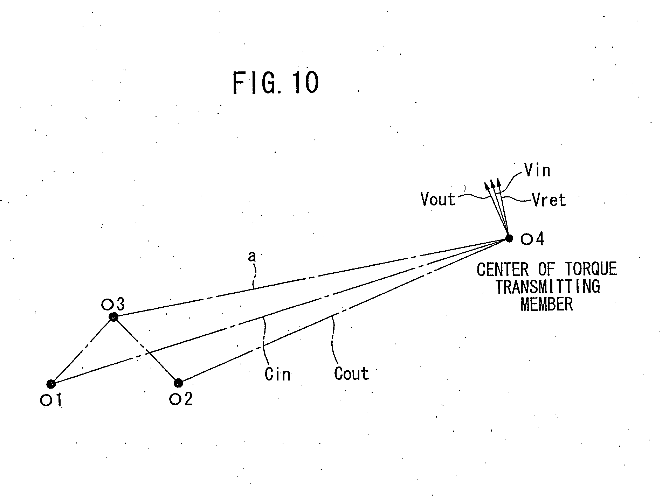

The constant rotational speed of the constant velocity universal joint 10 according to the first embodiment will be described below with reference to FIG. 10.

In FIG. 10, the distance between the center 04 of the torque transmitting member 20 and the center 03 of rotation of the retainer 16 is designated by a, the distance between the center 04 of the torque transmitting member 20 and the center O1 of rotation of the input shaft side member 12 by Cin, and the distance between the center 04 of the torque transmitting member 20 and the center O2 of rotation of the output shaft side member 14 by Cout. The center O4 of the torque transmitting member 20 represents the center of gravity of the torque transmitting member 20 which is in the form of a cylinder.

The linear velocity (tangential velocity vector) of the input shaft side member 12 at the center O4 of the torque transmitting member 20 is designated by Vin, the linear velocity (tangential velocity vector) of the output shaft side member 14 at the center 04 of the torque transmitting member 20 by Vout, and the linear velocity (tangential velocity vector) of the retainer 16 at the center 04 of the torque transmitting member 20 by Vret.

The angular velocity of the input shaft side member 12 is designated by ω1 (input shaft angular velocity), and the angular velocity of the output shaft side member 14 by ω2 (output shaft angular velocity).

If the angular velocity ω1 of the input shaft side member 12 is divided into the radius (Cin) and the linear velocity (Vin), then it is expressed by:

$$\omega 1 = Vin/Cin \qquad\qquad \cdots(1)$$

From the linear velocity ratios (tangential velocity ratios) at the center O4 of the torque transmitting member 20, the following equations are derived:

$$Vin/Vret = Cin/a \qquad\qquad \cdots(2)$$

$$Vout/Vret = Cout/a \qquad \cdots(3)$$

The following equation is obtained from the equations (2), (3):
Vin/Vout = Cin/Cout. This equation is modified into:

$$Vin = (Cin/Cout) \cdot Vout \qquad \cdots(4)$$

By substituting the equation (4) into the equation (1), the following equation is obtained:

$$\omega 1 = (1/Cin) \cdot (Cin/Cout) \cdot Vout$$
$$= Vout/Cout$$
$$= \omega 2$$

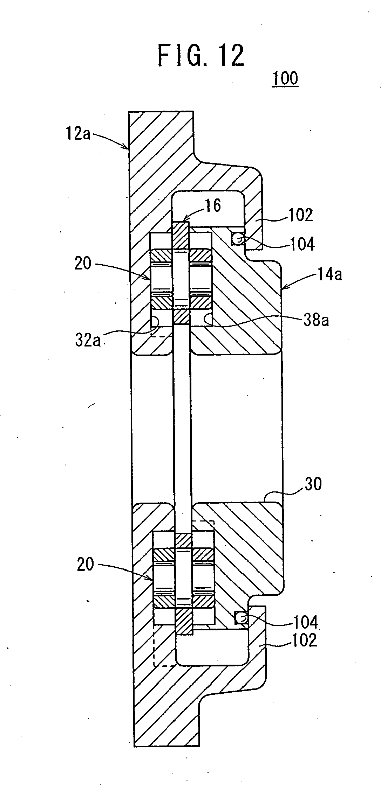

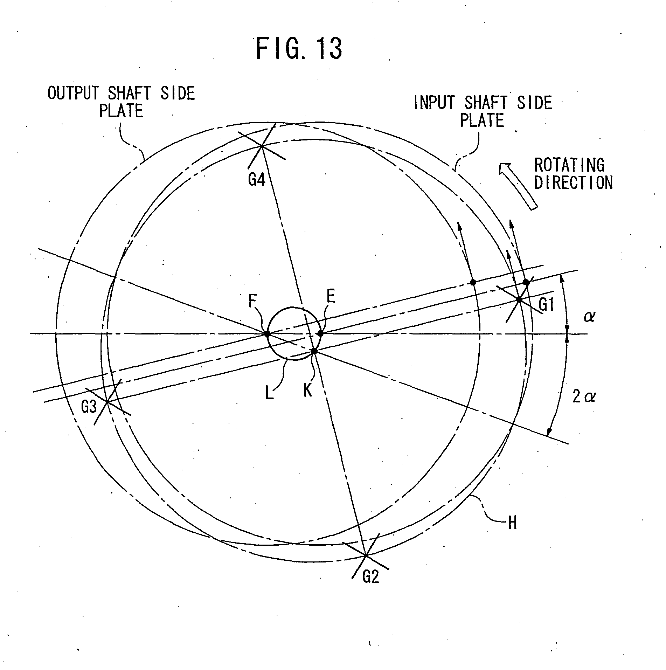

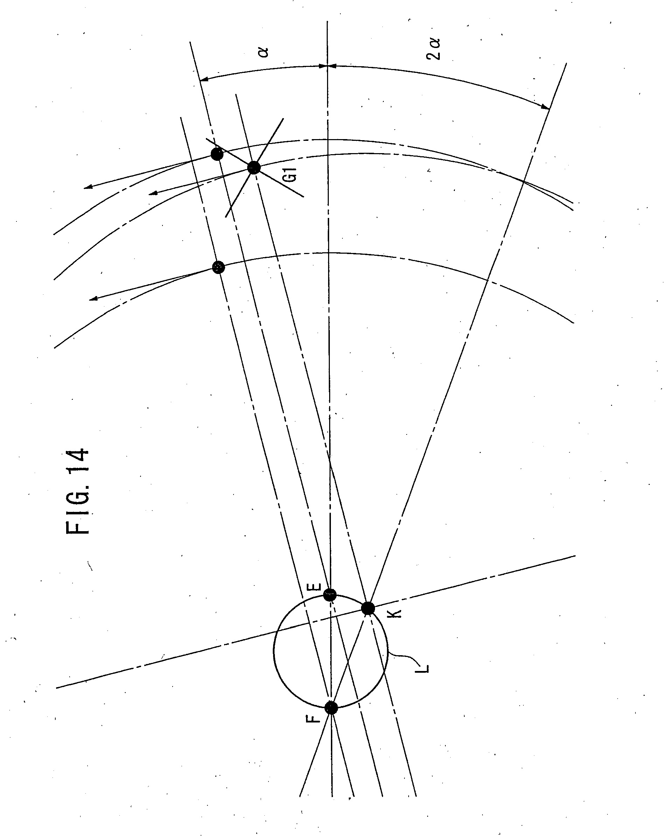

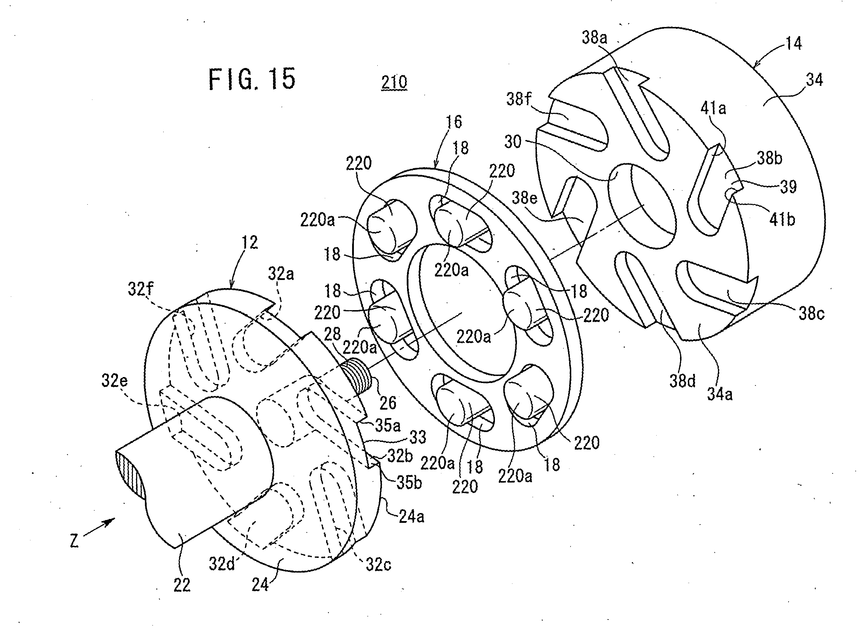

The input shaft angular velocity ω1 and the output shaft angular velocity ω2 are thus related as ω1 = ω2, indicating that the input shaft and the output shaft rotate at the constant rotational speed.
As shown in FIGS. 13 and 14, in the conventional flexible coupling disclosed in Japanese Laid-Open Patent Publication No. 2004-90696, the axis (center of rotation) E of an input shaft side plate and the axis (center of rotation) F of an output shaft side plate are displaced eccentrically with respect to each other, and if a circle H interconnecting points of intersection of four linear guides (points G1 through G4 of intersection between the guide members and the guide rails) has a center K, then the center K moves along a path represented by a circle L. The circle L has a diameter passing through the axis E and the axis F.
When the conventional flexible coupling rotates an angle α in the direction indicated by the arrow while the axis E of the input shaft plate and the axis F of the output shaft plate are being displaced eccentrically (out of coaxial alignment) with respect to each other, the center K of the circle H interconnecting the points of intersection of the four linear guides and the circle L along which the center K moves rotate (revolve) at an angular velocity of 2α in a direction opposite to the direction in which the input shaft side plate and the output shaft side plate rotate, so that the conventional coupling rotates at a constant rotational speed.
With the conventional flexible coupling, therefore, since an object placed at the points of intersection of the linear guides makes two revolutions (through 720 degrees) when the input shaft side plate and the output shaft side plate makes one revolution (through 360 degrees) about the axis E and the axis F, the object placed at the points of intersection of the linear guides produces vibrations.
According to the first embodiment, however, the constant velocity universal joint is capable of transmitting the rotational torque smoothly as it prevents vibrations of the conventional flexible coupling from being produced.
A constant velocity universal joint 100 according to a second embodiment of the present invention is shown in FIG. 12. The parts of the constant velocity universal joint 100 which are identical to those of the constant velocity universal joint 10 according to the first embodiment are denoted by identical reference characters, and will not be described in detail below.
The constant velocity universal joint 100 according to the second embodiment differs from the constant velocity universal joint 10 according to the first embodiment in that an input shaft side member 12a has an annular crimped member 102 bent into an L-shaped cross section, and is coupled to an output shaft side member 14a by the crimped member 102.
The output shaft side member 14a has an annular groove defined in a region thereof engaged by the crimped member 102, and a plurality of ball bearings 104 are rollingly disposed in the annular groove.
Other structural details and advantages of the constant velocity universal joint 100 according to the second embodiment are the same as those of the constant velocity universal joint 10 according to the first embodiment, and will not be described in detail below.
A constant velocity universal joint 210 according to a third embodiment of the present invention is shown in FIGS. 15 through 17. The constant velocity universal joint 210 differs from the constant velocity universal joint 10 according to the first embodiment in that a plurality of rollers 220 are held, in place of the torque transmitting members 20, so as to be displaceable along the retaining windows 18 in the retainer 16.

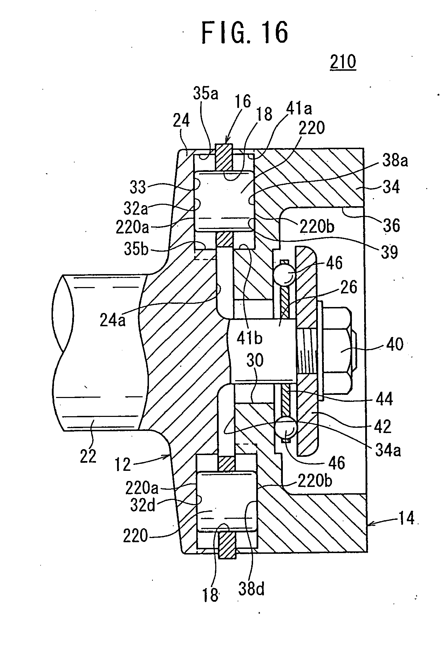

As shown in FIG. 15, each of the plurality (six in the present embodiment) of rollers 220 is in the form of a cylinder and has circular end faces 220a, 220b along the axial direction of the cylinder which function as sliding surfaces for sliding in the first guide grooves 32a through 32f and the second guide grooves 38a through 38f. Ridges lying between the end faces 220a, 220b and circumferential side walls of the rollers 220 are beveled into a round cross-sectional shape (see FIG. 16). The rollers 220 are not limited to the cylindrical shape, but may be of a hollow cylindrical shape.

The rollers 220 are held so as to be displaceable along the retaining windows 18 in the retainer 16, and the first guide grooves 32a through 32f in the input shaft side member 12 and the second guide grooves 38a through 38f in the output shaft side member 14 which confront the first guide grooves 32a through 32f, and the circular end faces 220a, 220b along the axes of the rollers 220 are held in contact with each other for sliding movement. The rollers 220 are made of a metal material, for example, and perform a rotational torque transmitting function.

The rollers 220 transmit a rotational torque from the first shaft, not shown, and the input shaft side member 12 through the output shaft side member 14 to the second shaft, not shown. When the rollers 220 are slidingly displaced along the first guide grooves 32a through 32f and the second guide grooves 38a through 38f, the rollers 220 allow the input shaft side member 12 and the output shaft side member 14 to be eccentrically displaced relatively to each other (allow the axis of the first shaft, not shown, and the axis of the second shaft, not shown, to be shifted out of coaxial alignment) in radial directions (directions perpendicular to the axial direction).

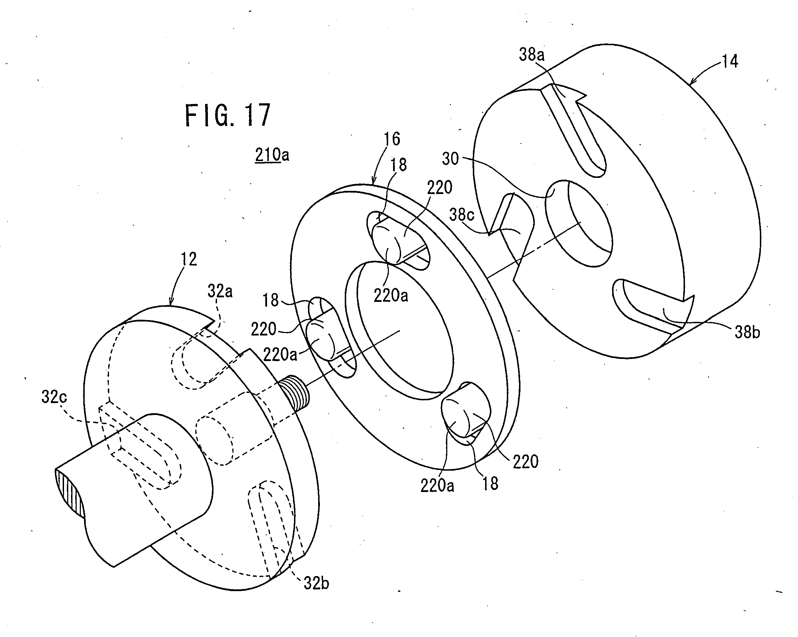

The number of rollers 220 is not limited to six. As indicated by a constant velocity universal joint 210a according to a modification shown in FIG. 17, a minimum of three rollers 220 may be employed. In the constant velocity universal joint 210a, the number of first guide grooves 32a through 32c, the number of second guide grooves 38a through 38c, and the number of retaining windows 18 in the retainer 16 are selected so as to correspond to the number of three rollers 220.

Other structural details and advantages of the constant velocity universal joint 210a are the same as those of the constant velocity universal joint 210 according to the third embodiment shown in FIG. 15, and will not be described in detail below.

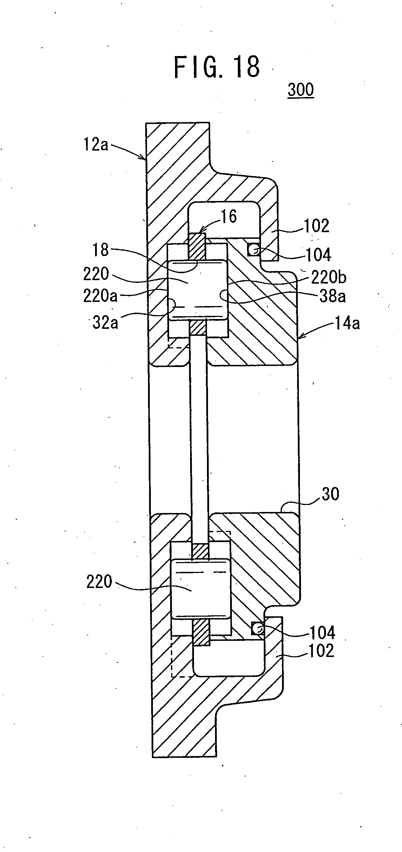

A constant velocity universal joint 300 according to a fourth embodiment of the present invention is shown in FIG. 18.

The constant velocity universal joint 300 according to the fourth embodiment differs from the constant velocity universal joint 210 according to the third embodiment in that an input shaft side member 12a has an annular crimped member 102 bent into an L-shaped cross section, and is coupled to an output shaft side member 14a by the crimped member 102.

The output shaft side member 14a has an annular groove defined in a region thereof engaged by the crimped member 102, and a plurality of ball bearings 104 are rollingly disposed in the annular groove.

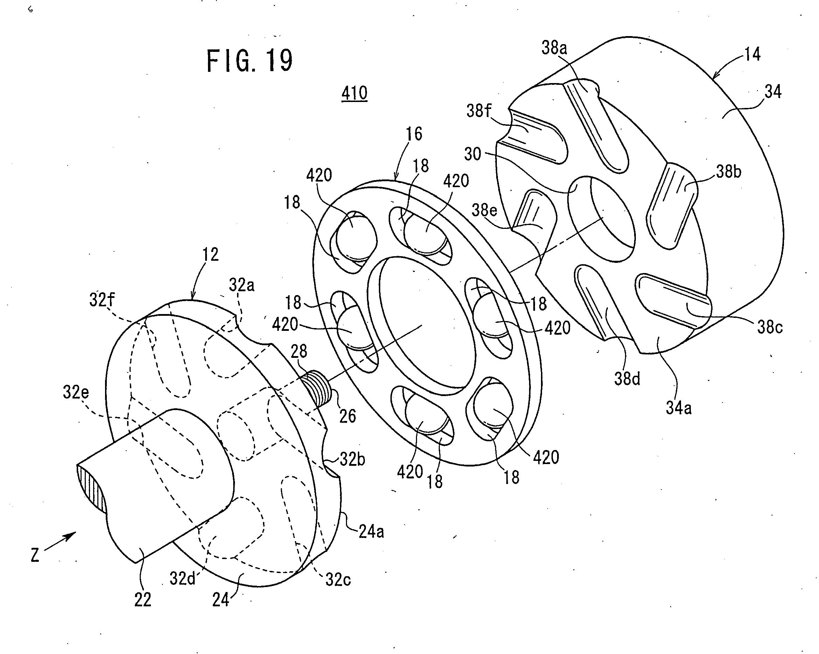

A constant velocity universal joint 410 according to a fifth embodiment of the present invention is shown in FIGS. 19 through 21. The constant velocity universal joint 410 differs from the constant velocity universal joint 10 according to the first embodiment in that a plurality of balls 420 are held, in place of the torque transmitting members 20, so as to be rotatable in the retaining windows 18 in the retainer 16.

As shown in FIG. 19, the side surface 24a of the disk 24 has a plurality of (six, i.e., as many as the number of the balls 420) first guide grooves 32a through 32f defined therein in the form of oblong grooves extending continuously to an outer circumferential edge of the disk 24 and inclined a predetermined angle toward the center of the disk 24 in a counterclockwise direction around a point O1 at the axial center of the disk 24.

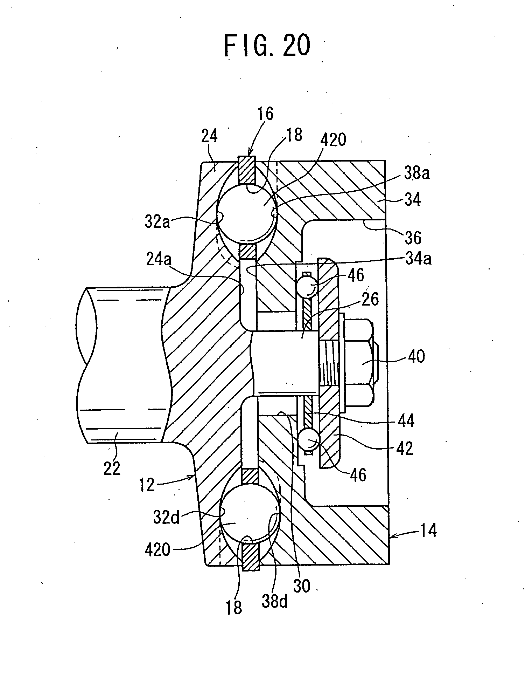

Each of the first guide grooves 32a (32b through 32f) comprises a substantially elliptical oblong groove defined in the circular side surface 24a and having an end disposed in the vicinity of the boss 26 between the center O1 of the circular side surface 24a and the outer circumferential edge and an opposite end continuously extending to the outer circumferential edge. The six first guide grooves 32a through 32f are disposed at angular intervals of 60 degrees around the axial center. As shown in FIGS. 19 and 20, each of the first guide grooves 32a through 32f has an arcuate cross-sectional shape or a composite cross-sectional shape having a pair of arcs crossing each other in a V-shaped pattern.

The first guide grooves 32a through 32f are inclined at an angle θ1 which is set as an angle of intersection between the diameter D of the disk 24 and the major axis L1 of the substantially elliptical first guide grooves 32a through 32f in the same manner as with the first embodiment (see FIG. 6). The inclination angle θ1 should preferably be in the range of 0 < θ1 < 90 degrees, and more preferably in the range of 35 < θ1 < 45 degrees.

As shown in FIGS. 19 and 20, the circular flat side surface (extending perpendicularly to the second shaft, not shown) 34a of the output shaft side member 14 which faces the side surface 24a of the input shaft side member 12 has a plurality of (six, i.e., as many as the number of the balls 420) second guide grooves 38a through 38f defined therein in the form of oblong grooves extending continuously to an outer circumferential edge of the output shaft side member 14 and inclined a predetermined angle toward the center of the output shaft side member 14 in a clockwise direction, opposite to the first guide grooves 32a through 32f, around a point O2 about which the output shaft side member 14 is rotatable.

Each of the second guide grooves 38a (38b through 38f) comprises a substantially elliptical oblong groove defined in the circular side surface 34a and having an end disposed intermediate between the center O2 and the outer circumferential edge and an opposite end continuously extending to the outer circumferential edge. The six second guide grooves 38a through 38f are disposed at angular intervals of 60 degrees around the axial center. Each of the second guide grooves 38a through 38f has an arcuate , cross-sectional shape or a composite cross-sectional shape having a pair of arcs crossing each other in a V-shaped pattern.

The second guide'grooves 38a through 38f are inclined at an angle $\theta 2$ which is set as an angle of intersection between the diameter (outside diameter) D of the bottomed hollow cylinder and the major axis L2 of the substantially elliptical second guide grooves 38a through 38f in the same manner as with the first embodiment (see FIG. 6). The inclination angle $\theta 2$ should preferably be in the range of $0 < \theta 2 < 90$ degrees, and more preferably in the range of $35 < \theta 2 < 45$ degrees.

As shown in FIG. 19, the plurality of (six in the present embodiment) balls 420 are rollingly disposed in the retaining windows 18 in the retainer 16 for rolling movement along a path defined by the first guide grooves 32a through 32f in the input shaft side member 12 and the second guide grooves 38a through 38f in the output shaft side member 14, which confront each other. The balls 420 comprise steel balls, for example, and perform a rotational torque transmitting function.

The balls 420 transmit a rotational torque from the first shaft, not shown, and the input shaft side member 12 through the output shaft side member 14 to the second shaft, not shown. When the balls 420 roll along the first guide grooves 32a through 32f and the second guide grooves 38a through 38f, the balls 420 allow the input shaft side member 12 and the output shaft side member 14 to be eccentrically displaced relatively to each other (allow the axis of the first shaft, not shown, and the axis of the second shaft, not shown, to be shifted out of coaxial alignment) in radial directions (directions perpendicular to the axial direction).

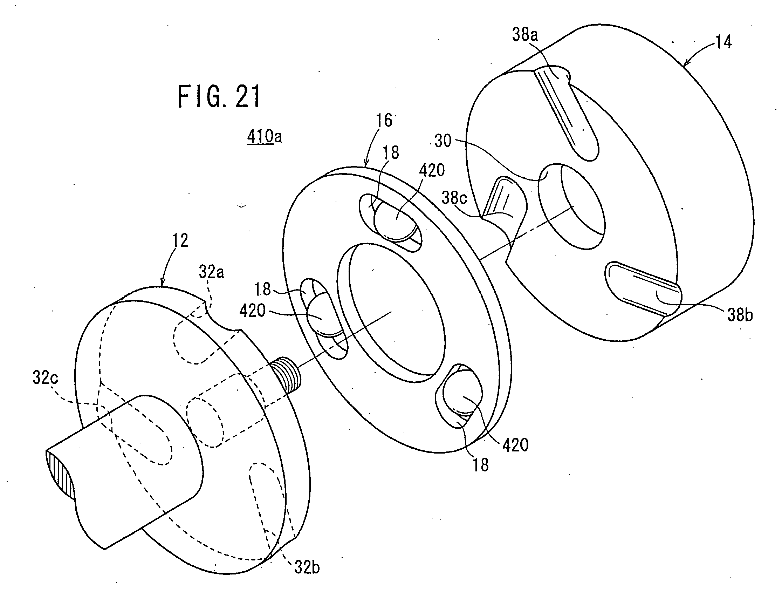

The number of balls 420 is not limited to six. As indicated by a constant velocity universal joint 410a according to a modification shown in FIG. 21, a minimum of three balls 420 may be employed. In the constant velocity universal joint 410a, the number of first guide grooves 32a through 32c, the number of second guide grooves 38a through 38c, and the number of retaining windows 18 in the retainer 16 are selected so as to correspond to the number of three balls 420.

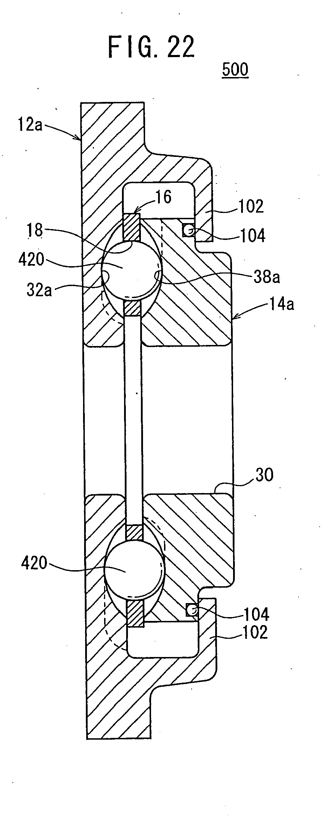

A constant velocity universal joint 500 according to a sixth embodiment of the present invention is shown in FIG. 22.

The constant velocity universal joint 500 according to the sixth embodiment differs from the constant velocity universal joint 410 according to the fifth embodiment in that an input shaft side member 12a has an annular crimped member 102 bent into an L-shaped cross section, and is coupled to an output shaft side member 14a by the crimped member 102.

The output shaft side member 14a has an annular groove defined in a region thereof engaged by the crimped member 102, and a plurality of ball bearings 104 are rollingly disposed in the annular groove.

**Claims**

1.  A constant velocity universal joint comprising:

    an input shaft side member (12) having a plurality of first guide grooves (32a through 32f) defined in a side surface thereof, said first guide grooves (32a through 32f) spaced at equal angles along a circumferential direction and each having a major axis (L1) crossing a diameter (D) of said input shaft side member (12);

    an output shaft side member (14) having a plurality of second guide grooves (38a through 38f) defined in a side surface thereof which faces the side surface of said input shaft side member (12) with said first guide grooves (32a through 32f) defined therein, said second guide grooves (38a through 38f) spaced at equal angles along a circumferential direction and each having a major axis (L2) crossing said major axis (L1) of said first guide grooves (32a through 32f) at a predetermined intersection angle ($\theta$) ;

    a retainer (16) interposed between the side surface of said input shaft side member (12) with said first guide grooves (32a through 32f) defined therein and the side surface of said output shaft side member (14) with said second guide grooves (38a through 38f) defined therein, said retainer (16) having a plurality of retaining windows (18) defined therein; and

    torque transmitting members (20) for transmitting a torque, said torque transmitting members (20) being held so as to be displaceable along said retaining windows (18) in said retainer (16) and displaceable along said first guide grooves (32a through 32f) and/or said second guide grooves (38a through 38f);

    wherein said first guide grooves (32a through 32f), said second guide grooves (38a through 38f), and said retaining windows (18) are defined so as to correspond to a number of said torque transmitting members (20); and

    each of said torque transmitting members (20) comprises a disk (21) having an outer circumferential surface engaging in one of said retaining windows (18) in said retainer (16), and first and second shafts (23a, 23b) fixed coaxially to a center of said disk (21); a plurality of bearings (25) surrounding circumferential walls of said first and second shafts (23a, 23b), respectively; and first and second rings (27a, 27b) rotatably mounted on said first and second shafts (23a, 23b), respectively, so as to be rotatable around axes of said first and second shafts (23a, 23b) as said bearings (25) roll.

2.  A constant velocity universal joint according to claim 1, wherein said torque transmitting members (20) comprise at least three torque transmitting members.

3.  A constant velocity universal joint according to claim 1, wherein said intersection angle (θ) is greater than 70 degrees and smaller than 90 degrees (70 < θ < 90).

4.  A constant velocity universal joint according to claim 1, wherein when a center (O1) of rotation of said input shaft side member (12), a center (O2) of rotation of said output shaft side member (14), and a center (O3) of rotation of said retainer (16) are aligned with each other, said intersection angle (θ) is bisected into an inclination angle θ1 of said first guide groove (32a through 32f) and an inclination angle θ2 of said second guide groove (38a through 38f) with said diameter (D) extending through a point of intersection between said major axis (L1) of said first guide groove (32a through 32f) and said major axis (L2) of said second guide groove (38a through 38f).

5.  A constant velocity universal joint according to claim 4, wherein each of said inclination angle θ1 and said inclination angle θ2 is greater than 35 degrees and smaller than 45 degrees (35 < θ1 < 45, 35 < θ2 < 45).

6.  A constant velocity universal joint comprising:

    an input shaft side member (12) having a plurality of first guide grooves (32a through 32f) defined in a side surface thereof, said first guide grooves (32a through 32f) spaced at equal angles along a circumferential direction and each having a major axis (L1) crossing a diameter (D) of said input shaft side member (12);
    an output shaft side member (14) having a plurality of second guide grooves (38a through 38f) defined in a side surface thereof which faces the side surface of said input shaft side member (12) with said first guide grooves (32a through 32f) defined therein, said second guide grooves (38a through 38f) spaced at equal angles along a circumferential direction and each having a major axis (L2) crossing said major axis (L1) of said first guide grooves (32a through 32f) at a predetermined intersection angle (θ);
    a retainer (16) interposed between the side surface of said input shaft side member (12) with said first guide grooves (32a through 32f) defined therein and the side surface of said output shaft side member (14) with said second guide grooves (38a through 38f) defined therein, said retainer (16) having a plurality of retaining windows (18) defined therein; and
    cylindrical rollers (220) for transmitting a torque, said rollers (220) being held so as to be displaceable along said retaining windows (18) in said retainer (16) and slidably disposed between said first guide grooves (32a through 32f) and said second guide grooves (38a through 38f);
    wherein said first guide grooves (32a through 32f), said second guide grooves (38a through 38f), and said retaining windows (18) are defined so as to correspond to a number of said rollers (220).

7.  A constant velocity universal joint according to claim 6, wherein said rollers (220) comprise at least three rollers.

8.  A constant velocity universal joint according to claim 6, wherein said intersection angle (θ) is greater than 70 degrees and smaller than 90 degrees (70 < θ < 90).

9.  A constant velocity universal joint according to claim 6, wherein when a center (O1) of rotation of said input shaft side member (12), a center (O2) of rotation of said output shaft side member (14), and a center (O3) of rotation of said retainer (16) are aligned with each other, said intersection angle (θ) is bisected into an inclination angle θ1 of said first guide groove (32a through 32f) and an inclination angle θ2 of said second guide groove (38a through 38f) with said diameter (D) extending through a point of intersection between said major axis (L1) of said first guide groove (32a through 32f) and said major axis (L2) of said second guide groove (38a through 38f).

10. A constant velocity universal joint according to claim 9, wherein each of said inclination angle θ1 and said inclination angle θ2 is greater than 35 degrees and smaller than 45 degrees (35 < θ1 < 45, 35 < θ2 < 45).

11. A constant velocity universal joint comprising:

an input shaft side member (12) having a plurality of first guide grooves (32a through 32f) defined in a side surface thereof, said first guide grooves (32a through 32f) spaced at equal angles along a circumferential direction and each having a major axis (L1) crossing a diameter (D) of said input shaft side member (12);

an output shaft side member (14) having a plurality of second guide grooves (38a through 38f) defined in a side surface thereof which faces the side surface of said input shaft side member (12) with said first guide grooves (32a through 32f) defined therein, said second guide grooves (38a through 38f) spaced at equal angles along a circumferential direction and each having a major axis (L2) crossing said major axis (L1) of said first guide grooves (32a through 32f) at a predetermined intersection angle ($\theta$);

a retainer (16) interposed between the side surface of said input shaft side member (12) with said first guide grooves (32a through 32f) defined therein and the side surface of said output shaft side member (14) with said second guide grooves (38a through 38f) defined therein, said retainer (16) having a plurality of retaining windows (18) defined therein; and

balls (420) for transmitting a torque, said balls (420) being held so as to be displaceable along said retaining windows (18) in said retainer (16) and rollingly disposed between said first guide grooves (32a through 32f) and said second guide grooves (38a through 38f);

wherein said first guide grooves (32a through 32f), said second guide grooves (38a through 38f), and said retaining windows (18) are defined so as to correspond to a number of said balls (420).

**12.** A constant velocity universal joint according to claim 11, wherein said balls (420) comprise at least three rollers.

**13.** A constant velocity universal joint according to claim 11, wherein said intersection angle ($\theta$) is greater than 70 degrees and smaller than 90 degrees (70 < $\theta$ < 90).

**14.** A constant velocity universal joint according to claim 11, wherein when a center O1 of rotation of said input shaft side member (12), a center O2 of rotation of said output shaft side member (14), and a center O3 of rotation of said retainer (16) are aligned with each other, said intersection angle ($\theta$) is bisected into an inclination angle $\theta1$ of said first guide groove (32a through 32f) and an inclination angle $\theta2$ of said second guide groove (38a through 38f) with said diameter (D) extending through a point of intersection between said major axis (L1) of said first guide groove (32a through 32f) and said major axis (L2) of said second guide groove (38a through 38f).

**15.** A constant velocity universal joint according to claim 14, wherein each of said inclination angle $\theta1$ and said inclination angle $\theta2$ is greater than 35 degrees and smaller than 45 degrees (35 < $\theta1$ < 45, 35 < $\theta2$ < 45).

**16.** A constant velocity universal joint according to claim 11, wherein either one of said input shaft side member (12) and said output shaft side member (14) has a bearing (104) for bearing a reactive force acting in a direction to space said input shaft side member (12) and said output shaft side member (14) from each other.

**17.** A constant velocity universal joint according to claim 11, wherein either one of said input shaft side member (12) and said output shaft side member (14) has a crimped member (102) coupling said input shaft side member (12) and said output shaft side member (14) to each other.

FIG. 1    <u>10</u>

EP 1 835 192 A1

# FIG. 2

# FIG. 3

FIG. 4

EP 1 835 192 A1

# FIG. 5

18

# FIG. 6

EP 1 835 192 A1

# FIG. 7

# FIG. 8

A

20    (1)

16

(11)                                             (3)

38a

14

O3

O1  O2

(9)                                             (5)

12

32a

18    (7)

TWO-DOT-AND-DASH LINES: INPUT SHAFT SIDE MEMBER 12
                        (FIRST GUIDE GROOVES 32a)
BROKEN LINES: OUTPUT SHAFT SIDE MEMBER 14
              (SECOND GUIDE GROOVES 38a)
SOLID LINES: RETAINER 16, TORQUE TRANSMITTING MEMBERS 20
             (RETAINING WINDOWS 18)

# FIG. 9

TWO-DOT-AND-DASH LINES: INPUT SHAFT SIDE MEMBER 12
(FIRST GUIDE GROOVES 32a)
BROKEN LINES: OUTPUT SHAFT SIDE MEMBER 14
(SECOND GUIDE GROOVES 38a)
SOLID LINES: RETAINER 16, TORQUE TRANSMITTING MEMBERS 20
(RETAINING WINDOWS 18)

# FIG. 10

Vin

Vout Vret

O4

CENTER OF TORQUE
TRANSMITTING
MEMBER

a

O3

Cin Cout

O1 O2

FIG. 11

EP 1 835 192 A1

# FIG. 12

100

# FIG. 13

OUTPUT SHAFT SIDE
PLATE

INPUT SHAFT SIDE
PLATE

ROTATING
DIRECTION

G4

F    E

G1

α

L    K

2α

G3

H

G2

FIG. 14

EP 1 835 192 A1

FIG. 15    210

EP 1 835 192 A1

# FIG. 16

FIG. 17

210a

14

38b

38a

30

38c

220

16

18

220a

220

18

220a

220a

18

220

220a

32a

32b

12

32c

# FIG. 18

300

# FIG. 19

410

EP 1 835 192 A1

# FIG. 20

FIG. 21

410a

# FIG. 22

500

# FIG. 23

## INTERNATIONAL SEARCH REPORT

| International application No. |
| --- |
| PCT/JP2005/023827 |

A.  CLASSIFICATION OF SUBJECT MATTER
*F16D3/04*(2006.01)

According to International Patent Classification (IPC) or to both national classification and IPC

B.  FIELDS SEARCHED

Minimum documentation searched (classification system followed by classification symbols)
*F16D3/04*(2006.01), *F16D3/48*(2006.01)

Documentation searched other than minimum documentation to the extent that such documents are included in the fields searched
Jitsuyo Shinan Koho         1922-1996   Jitsuyo Shinan Toroku Koho   1996-2006
Kokai Jitsuyo Shinan Koho   1971-2006   Toroku Jitsuyo Shinan Koho   1994-2006

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
| --- | --- | --- |
| X<br>Y | JP 2-113123 A  (Kabushiki Kaisha Keisebun),<br>25 April, 1990 (25.04.90),<br>Full text; all drawings<br>(Family: none) | 6-17<br>1-5 |
| Y | US 2343244 A  (Henry Lasenby ROSE),<br>07 March, 1944 (07.03.44),<br>Page 1, right column, lines 28 to 51;<br>Figs. 1 to 4<br>(Family: none) | 1-5 |
| Y | DE 714243 C  (SIEMENS-SCHUCKERTWERKE AKT.-GES.),<br>25 November, 1941 (25.11.41),<br>Figs. 1, 2<br>(Family: none) | 1-5 |

☒  Further documents are listed in the continuation of Box C.          ☐  See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>23 March, 2006 (23.03.06) | Date of mailing of the international search report<br>04 April, 2006 (04.04.06) |
| --- | --- |
| Name and mailing address of the ISA/<br>Japanese Patent Office | Authorized officer |
| Facsimile No. | Telephone No. |

Form PCT/ISA/210 (second sheet) (April 2005)

**INTERNATIONAL SEARCH REPORT**

| International application No. |
| --- |
| PCT/JP2005/023827 |

C (Continuation).   DOCUMENTS CONSIDERED TO BE RELEVANT

| Category* | Citation of document, with indication, where appropriate, of the relevant passages | Relevant to claim No. |
| --- | --- | --- |
| P,X | JP 2005-172217 A  (NTN Corp.),<br>30 June, 2005 (30.06.05),<br>Full text; all drawings<br>& WO 2005/050042 A1 | 11-15 |

Form PCT/ISA/210 (continuation of second sheet) (April 2005)

## INTERNATIONAL SEARCH REPORT

| International application No. |
|---|
| PCT/JP2005/023827 |

---

**Box No. II**     **Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

---

**Box No. III**     **Observations where unity of invention is lacking (Continuation of item 3 of first sheet)**

This International Searching Authority found multiple inventions in this international application, as follows:

The inventions of claims 1-17 are not so linked as to form a single general inventive concept because of the following reason. The matter common to the inventions of claims 1-17 is a constant velocity joint (hereinafter referred to as the "common matter") having an input shaft side member with first guiding grooves, an output shaft side member with second guiding grooves, a retainer with retaining windows, and a torque transmission member. The search has revealed, however, that the common matter is not novel because it is disclosed in JP 2-113123 A (Kabushiki Kaisha Keisebun), 25 April, 1990 (25.04.90), full text, all the drawings. As a result, since the common matter makes no contribution over the prior art, (continued to extra sheet)

1. ☐ As all required additional search fees were timely paid by the applicant, this international search report covers all searchable claims.

2. ☒ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**
the

☐ The additional search fees were accompanied by the applicant's protest and, where applicable, payment of a protest fee..

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (April 2005)

| **INTERNATIONAL SEARCH REPORT** | International application No. |
|---|---|
| | PCT/JP2005/023827 |

Continuation of Box No.III of continuation of first sheet(2)

it is not a special technical feature within the meaning of PCT Rule 13.2, second sentence.

Form PCT/ISA/210 (extra sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004090696 A